# EUROPÄISCHE PATENTSCHRIFT

(11) **EP 3 107 766 B1**
(45) Veröffentlichungstag und Bekanntmachung des Hinweises auf die Patenterteilung: **30.08.2017**
(21) Anmeldenummer: 14796420.9
(22) Anmeldetag: 05.11.2014
(51) Int. Cl.: B60R 21/0134

(54) **SICHERHEITSEINRICHTUNG FÜR EIN KRAFTFAHRZEUG UND ZUGEHÖRIGES BETRIEBSVERFAHREN**
VEHICLE SAFETY SYSTEM AND METHOD
SYSTÈME ET METHODE DE SÉCURITÉ DE VÉHICULE

(30) Priorität: 22.02.2014 DE 102014002540
(43) Veröffentlichungstag der Anmeldung: 28.12.2016
(73) Patentinhaber: Audi AG, 85045 Ingolstadt (DE)
(72) Erfinder: FÜRST, Franz, 85114 Buxheim (DE)
(74) Vertreter: Thielmann, Frank
(86) Internationale Anmeldenummer: PCT/EP2014/002959
(87) Internationale Veröffentlichungsnummer: WO 2015/124162

(56) Entgegenhaltungen:
- DE-A1-102004 058 663
- DE-A1-102009 040 413
- DE-A1-102011 114 297
- DE-B4- 4 320 226
- US-A1- 2002 112 912

## Beschreibung

Die Erfindung betrifft eine Sicherheitseinrichtung für ein Kraftfahrzeug, mit wenigstens einem Sensor, der dazu ausgebildet ist, einen drohenden Aufprall oder eine drohende Kollision zu detektieren und gegebenenfalls ein Auslösesignal zu erzeugen, sowie mit einer Steuerungseinrichtung, die dazu ausgebildet ist, beim Vorliegen eines Auslösesignals eine Schutzeinrichtung auszulösen. Eine solche Sicherheitseinrichtung wird in DE 10 2004 058 663 gemäß Oberbegriff des Anspruchs 1 offenbart. Mittlerweile weisen Kraftfahrzeuge unterschiedliche Sicherheitseinrichtungen auf, die in der Lage sind, einen drohenden Unfall in Form eines Aufpralls auf ein Hindernis oder in Form einer Kollision mit einem anderen Verkehrsteilnehmer prädiktiv zu detektieren, so dass eine Schutzeinrichtung bereits zeitlich vor dem Eintritt des Unfallereignisses ausgelöst werden kann. Ein Beispiel für eine derartige Schutzeinrichtung ist ein im Innenraum des Kraftfahrzeugs angeordneter Airbag. Airbagsysteme zählen zu den Insassenrückhaltesystemen und umfassen einen Gasgenerator, der einen Kunststoffsack innerhalb weniger Millisekunden mit einem Gas füllt. Ein weiteres Beispiel für derartige Schutzeinrichtungen ist ein Gurtstraffer, der mit einem elektrischen und/oder pyrotechnischen Aktuator gekoppelt ist. Darüber hinaus können Karosseriekomponenten, beispielsweise eine Frontklappe, bei einem detektierten drohenden Unfall bewegt werden, um zwischen der Frontklappe und dem darunter liegenden Motorraum einen Verformungsraum zu bilden, wodurch Verletzungen beteiligter Verkehrsteilnehmer verringert werden können.

Eine gattungsgemäße Sicherheitseinrichtung ist aus DE 197 49 838 A1 bekannt. Die Sicherheitseinrichtung ist ein passives Rückhaltesystem, dem eine Steuereinheit zugeordnet ist, um bei einem Aufprall eines Fahrzeugs, in dem das Rückhaltesystem eingebaut ist, Komponenten des Rückhaltesystems zu betätigen. Zusätzlich umfasst das passive Rückhaltesystem einen Precrash-Sensor, der einen unmittelbar bevorstehenden Aufprall des Fahrzeugs mit hoher Wahrscheinlichkeit detektieren und ein Signal zum Auslösen des Rückhaltesystems generieren kann: Wenn allerdings der Aufprall ausbleibt, werden die betätigten Komponenten wieder in eine Ausgangsstellung verfahren. Dieses Rückhaltesystem kann z. B. einen Gurtstraffer umfassen.

Da derartige Schutzeinrichtungen bereits ausgelöst werden müssen, bevor ein Aufprall oder eine Kollision stattgefunden hat, besteht die Möglichkeit einer Falschauslösung, d. h. eine Schutzeinrichtung wird ausgelöst, anschließend tritt ein prognostizierter Aufprall jedoch nicht ein, beispielsweise da ein anderer Verkehrsteilnehmer oder der Fahrer selbst ein Ausweichmanöver eingeleitet hat. In derartigen Fällen wird jedoch die Schutzeinrichtung durch die Steuerungseinrichtung ausgelöst, so dass beispielsweise ein Airbag entfaltet oder ein Gurtstraffer aktiviert oder eine Frontklappe in eine erhöhte Schutzstellung gebracht wird. In diesen Fällen besteht die Gefahr, dass der Fahrer, der zumeist erstmalig mit derartigen Schutzeinrichtungen konfrontiert wird, sich erschreckt, so dass er unkontrollierte Lenkbewegungen durchführt oder andere Reaktionen zeigt, die ihn oder andere Verkehrsteilnehmer gefährden. Es besteht daher die Gefahr, dass in der Folge einer Falschauslösung einer Schutzeinrichtung eine gefährliche Situation oder sogar ein Unfall auftritt.

Der Erfindung liegt daher die Aufgabe zugrunde, eine Sicherheitseinrichtung für ein Kraftfahrzeug anzugeben, durch die im Falle einer Falschauslösung einer Schutzeinrichtung eine gefährliche Situation verhindert wird.

Zur Lösung dieser Aufgabe ist bei einer Sicherheitseinrichtung der eingangs genannten Art erfindungsgemäß vorgesehen, dass sie dazu ausgebildet ist, zu prüfen, ob der prognostizierte Aufprall oder die Kollision innerhalb eines prognostizierten Zeitraums stattgefunden hat und wobei bei einer detektierten Falschauslösung die Sicherheitseinrichtung die Kontrolle über das Kraftfahrzeug übernimmt und dieses in einen automatischen Fahrmodus überführt, wodurch das Kraftfahrzeug in einen sicheren Zustand gebracht wird.

Die Erfindung beruht auf der Erkenntnis, dass unmittelbar nach einer Falschauslösung einer Schutzeinrichtung, beispielsweise nach dem fälschlichen Auslösen eines Airbags, eine gefährliche Situation vorliegt, da ein Fahrer üblicherweise noch nie zuvor eine derartige Falschauslösung erlebt hat. Dies gilt sowohl für einen im Fahrzeuginnenraum angeordneten Airbag, beispielsweise ein im Lenkrad eingebauter Airbag oder einen Seitenairbag, als auch für einen im Außenbereich des Fahrzeugs angeordneten Außenairbag, der vor Eintritt einer Kollision gezündet wird, um die Deformationszone zu erweitern.

Es besteht daher die Gefahr, dass er unkoordinierte oder unkontrollierte Lenk- oder Pedalbetätigungen vornimmt, die zu einer gefährlichen Situation oder sogar zu einem Unfall führen könnten. Bei anderen Personen besteht die Gefahr, dass sie sich erschrecken und ihre Aufmerksamkeit nicht mehr auf die Fahrbahn, das Fahrzeug oder übrige Verkehrsteilnehmer richten, wodurch ebenfalls gefährliche Situationen stattfinden können. Die erfindungsgemäße Sicherheitseinrichtung beseitigt dieses Problem, indem sie bei einer detektierten Falschauslösung die Kontrolle über das Kraftfahrzeug übernimmt und dieses in einen automatischen Fahrmodus überführt, wodurch das Kraftfahrzeug in einen sicheren Zustand gebracht wird. Erfindungsgemäß wird der Fahrer zumindest temporär von der Führung des Kraftfahrzeugs ausgeschlossen, da das Kraftfahrzeug nach einer detektierten Falschauslösung von der Sicherheitseinrichtung gesteuert wird.

Bei der erfindungsgemäßen Sicherheitseinrichtung wird es bevorzugt, dass sie dazu ausgebildet ist, eine Falschauslösung der Schutzeinrichtung, insbesondere wenigstens eines Airbags und/oder wenigstens eines Gurtstraffers, anhand von Sensordaten zu detektieren, die vorzugsweise von wenigstens einem Beschleunigungssensor und/oder von wenigstens einem Deformationssensor stammen.

Mittels eines Beschleunigungssensors oder alternativ mittels eines Deformationssensors kann zuverlässig detektiert werden, ob ein Aufprall oder eine Kollision stattgefunden hat. Mit gewissen Einschränkungen sind auch andere Sensoren verwendbar, beispielsweise Umfeldsensoren wie ein optischer Sensor, eine Kamera, ein Radarsensor oder ein Ultraschallsensor, die Bestandteil von Fahrerassistenzsystemen sind. Sofern keiner dieser vorhandenen Sensoren innerhalb des prognostizierten Zeitraums für die Kollision ein eine Kollision anzeigendes Sensorsignal liefert, kann daraus geschlossen werden, dass eine Falschauslösung stattgefunden hat. In diesem Fall wird das Kraftfahrzeug durch die Sicherheitseinrichtung in den sicheren Zustand überführt.

Um die nach einer Falschauslösung vorhandene gefährliche Situation zu beseitigen, kann es vorgesehen sein, dass das Überführen des Kraftfahrzeugsin den sicheren Zustand das Durchführen eines abgesicherten Nothaltmanövers umfasst. Die Sicherheitseinrichtung prüft daher, wie ausgehend von der momentanen Position, Geschwindigkeit und dem momentanen Verkehr im Umfeld des Kraftfahrzeugs, ein Nothaltmanöver am einfachsten eingeleitet werden kann. Wenn ausreichend Platz vorhanden ist, kann das Kraftfahrzeug abgebremst und auf einem Standstreifen, einem Parkplatz oder einer anderen geeigneten freien Fläche zum Stillstand gebracht werden. In anderen Fällen, beispielsweise wenn keine geeignete Stelle für ein Nothaltmanöver vorhanden ist, wird zunächst die Fahrt des Kraftfahrzeugs fortgesetzt, gegebenenfalls mit verringerter Geschwindigkeit, bis eine geeignete Position für ein Nothaltmanöver erreicht ist. Um den Fahrer zu berühren, kann in diesem Zustand, wenn die Sicherheitseinrichtung die Führung des Fahrzeugs übernommen hat, eine entsprechende optische oder akustische Information an den Fahrer ausgegeben werden.

Sofern das Kraftfahrzeug mit einem Navigationssystem ausgerüstet ist, kann das Nothaltmanöver, das von der erfindungsgemäßen Sicherheitseinrichtung durchgeführt wird, das Festlegen einer risikominimalen Anhalteposition aus prädiktiven Streckendaten des Kraftfahrzeugs und das Anfahren der Anhalteposition umfassen. Dabei steht im Vordergrund, dass die momentan vorhandene gefährliche Situation entschärft wird, ohne dass andere Verkehrsteilnehmer gefährdet werden, zudem wird angestrebt, das Kraftfahrzeug baldmöglichst an der festgelegten Anhalteposition zu stoppen.

Um zu verhindern, dass der Fahrer, der sich gegebenenfalls durch das Auslösen der Schutzeinrichtung erschreckt hat, irgendeinen nicht optimalen Bedienvorgang durchführt, wird es bevorzugt, dass die Sicherheitseinrichtung dazu ausgebildet ist, das Überführen in den sicheren Zustand unabhängig von einer Lenk- oder Pedalbetätigung des Fahrers vorzunehmen. Somit wird die Steuerung des Kraftfahrzeugs in diesem Zustand vollständig von der Sicherheitseinrichtung übernommen, eventuell durch den Fahrer vorgenommene Betätigungen werden dabei ignoriert.

Daneben betrifft die Erfindung ein Verfahren für den Betrieb einer Sicherheitseinrichtung für ein Kraftfahrzeug, mit den folgenden Schritten: Detektieren eines drohenden Aufpralls oder einer drohenden Kollision mittels wenigstens eines ein Auslösesignal erzeugenden Sensors, Auslösen einer.Schutzeinrichtung bei Vorliegen eines Auslösesignals durch eine Steuerungseinrichtung. Das erfindungsgemäße Verfahren zeichnet sich dadurch aus, dass die Sicherheitseinrichtung prüft, ob der prognostizierte Aufprall oder die Kollision innerhalb eines prognostizierten Zeitraums stattgefunden hat und wobei bei einer detektierten Falschauslösung die Sicherheitseinrichtung die Kontrolle über das Kraftfahrzeug übernimmt und dieses in einen automatischen Fahrmodus überführt, wodurch das Kraftfahrzeug in einen sicheren Zustand gebracht wird.

Bei dem erfindungsgemäßen Verfahren wird es bevorzugt, dass die Sicherheitseinrichtung eine Falschauslösung der Schutzeinrichtung, insbesondere eine Falschauslösung wenigstens eines Airbags oder wenigstens eines Gurtstraffers, anhand von Sensordaten detektiert, die vorzugsweise von wenigstens einem Beschleunigungssensor und/oder von wenigstens einem Deformationssensor stammen.

Im Rahmen der Erfindung kann es auch vorgesehen sein, dass die Sicherheitseinrichtung im Rahmen der Überführung des Kraftfahrzeugs in den sicheren Zustand ein abgesichertes Nothaltmanöver durchführt. Vorzugsweise wird bei dem erfindungsgemäßen Verfahren im Rahmen des Nothaltmanövers eine risikominimale Anhalteposition aus prädiktiven Streckendaten des Kraftfahrzeugs festgelegt und die Anhalteposition angefahren.

Bei dem erfindungsgemäßen Verfahren überführt die Sicherheitseinrichtung das Kraftfahrzeug vorzugsweise unabhängig von einer Lenk- oder Pedalbetätigung des Fahrers in den sicheren Zustand.

Weitere Vorteile und Einzelheiten der Erfindung werden nachfolgend anhand eines Ausführungsbeispiels unter Bezugnahme auf die Zeichnungen erläutert.

Die Zeichnungen sind schematische Darstellungen und zeigen:
- Fig. 1: ein Flussdiagramm mit den wesentlichen Schritten des erfindungsgemäßen Verfahrens;
- Fig. 2: eine schematisch dargestellte erfindungsgemäße Sicherheitseinrichtung, die Bestandteil eines Kraftfahrzeugs ist; und
- Fig. 3: eine Verkehrssituation, bei der die erfindungsgemäße Sicherheitseinrichtung aktiviert ist.

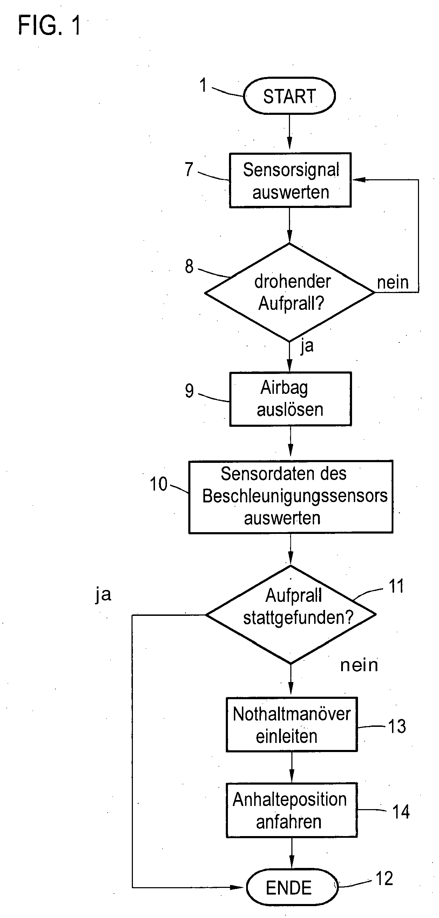

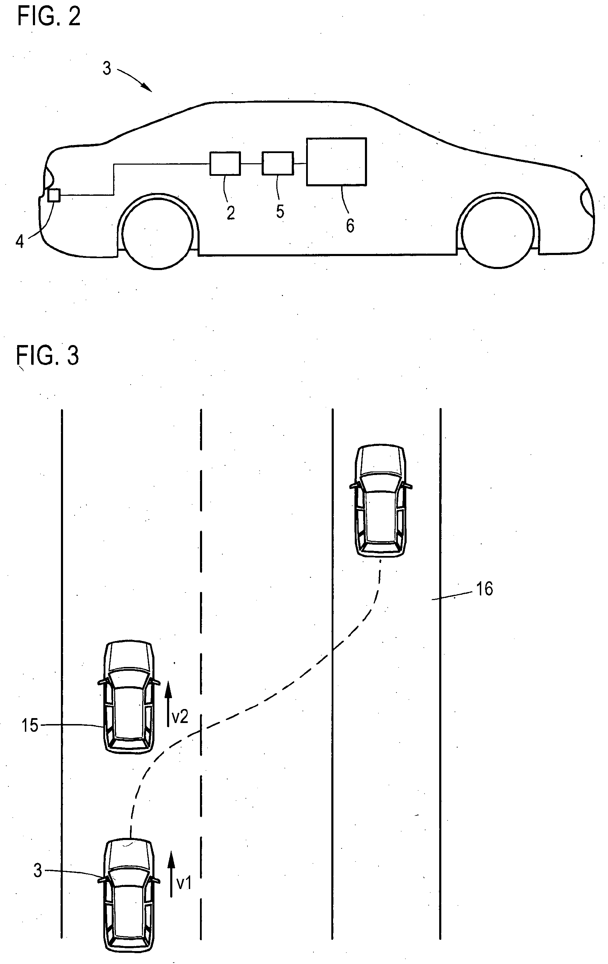

Die Sicherheitseinrichtung und das zugehörige Betriebsverfahren werden anhand des Flussdiagramms von Fig. 1 und der schematischen Darstellung der Sicherheitseinrichtung in Fig. 2 erläutert.

Nach dem Start 1 des Verfahrens werden der Sicherheitseinrichtung 2, die Bestandteil eines Kraftfahrzeugs 3 ist, permanent Signale von Sensoren 4 zugeführt, um zu detektierten, ob ein Aufprall oder eine Kollision droht. Derartige Sensoren 4 sind an sich bekannt und werden zur Steuerung der Auslösung von Schutzeinrichtungen wie Airbags oder Gurtstraffern verwendet.

Es handelt sich dabei beispielsweise um einen Beschleunigungssensor oder mehrere, an unterschiedlichen Stellen in dem Kraftfahrzeug 3 angeordnete Beschleunigungssensoren. Alternativ oder zusätzlich kann ein drohender Aufprall oder eine drohende Kollision auch durch einen optischen Sensor wie eine Kamera mit Bildverarbeitungseinheit oder einen Radarsensor oder einen Ultraschallsensor erfasst werden. Diese Sensoren können auch in Kombination eingesetzt werden, um Falschauslösungen zu verhindern bzw. deren Gefahr zu minimieren.

Die von den Sensoren 4 zur Verfügung gestellte Sensorsignale werden der Sicherheitseinrichtung 2 zugeführt und von dieser ausgewertet. Falls die Auswertung ergibt, dass ein Aufprall oder eine Kollision innerhalb eines kurzen, bevorstehenden Zeitraums zu erwarten ist, wird das Sensorsignal, bei dem es sich gegebenenfalls auch um ein verarbeitetes Signal, in das die Rohsignale unterschiedlicher Sensoren eingeflossen sind, handelt, als Auslösesignal gewertet. Die Sicherheitseinrichtung 2 umfasst eine Steuerungseinrichtung 5, die mit einer Schutzeinrichtung gekoppelt ist, die in dem dargestellten Ausführungsbeispiel als Airbag 6 ausgebildet ist. Beim Vorliegen des Auslösesignals löst die Steuerungseinrichtung 5 den Airbag 6 aus.

Bezugnehmend auf Fig. 1 wird nach dem Start 1 des Verfahrens das Sensorsignal im Schritt 7 ausgewertet, im nächsten Schritt 8 wird geprüft, ob ein Aufprall droht. Sofern kein Aufprall droht, verzweigt das Verfahren wieder zu dem vorangehenden Schritt, somit erfolgt permanent eine Auswertung der von dem Sensor 4 gelieferten Sensorsignale. Wenn allerdings in dem Schritt 8 entschieden worden ist, dass ein Aufprall droht, wird im Schritt 9 der Airbag 6 ausgelöst.

In bestimmten Fällen kann es sein, dass eine prognostizierte Kollision nicht eintritt, beispielsweise weil ein anderer Verkehrsteilnehmer oder der Fahrer des mit der Sicherheitseinrichtung 2 ausgerüsteten Kraftfahrzeugs 3 ein Brems-, Lenk- oder Ausweichmanöver ausgelöst hat, wodurch eine Kollision vermieden werden konnte.

Im Schritt 10 werden anschließend Sensordaten des Sensors 4, der als Beschleunigungssensor ausgebildet ist, von der Sicherheitseinrichtung 2 ausgewertet. Sofern innerhalb eines prognostizierten Zeitraums tatsächlich eine Kollision stattgefunden hat, kann diese mittels des Beschleunigungssensors 4 erfasst werden. Wenn die Auswertung der Sensordaten des Sensors 4 das Ergebnis liefert, dass tatsächlich ein Aufprall stattgefunden hat, wird das Verfahren im Schritt 12 beendet. Wenn die Entscheidung 11 andererseits das Ergebnis ergeben hat, dass kein Aufprall stattgefunden hat, wird durch die Sicherheitseinrichtung 2 ein Nothaltmanöver im Schritt 13 eingeleitet. Das Nothaltmanöver dient dazu, das Kraftfahrzeug 3 in einen sicheren Zustand zu überführen, da ein Fahrer sich üblicherweise beim Auslösen einer Schutzeinrichtung, insbesondere beim Entfalten des Airbags 6, erschreckt, so dass die Gefahr besteht, dass er dem momentanen Verkehrsgeschehen nicht die erforderliche Aufmerksamkeit widmet, wodurch sich die Unfallgefahr erhöht.

Im Rahmen der Überführung des Kraftfahrzeugs 3 in den sicheren Zustand wird unter der Steuerung der Steuerungseinrichtung 5 eine Anhalteposition angefahren (Schritt 14). In diesem Zustand wird das Kraftfahrzeug 3 automatisch von der Sicherheitseinrichtung 2 gesteuert. Die Sicherheitseinrichtung 2 ist in der Lage, das Umfeld des Kraftfahrzeugs 3 durch die bereits erwähnten optischen Sensoren, sowie weitere Umfeldsensoren wie Radar- oder Ultraschallsensoren zu erfassen. Dadurch kann die Sicherheitseinrichtung 2 das Kraftfahrzeug 3 so steuern, dass in dem Schritt 14 die sichere Anhaltposition angefahren werden kann. Die Sicherheitseinrichtung 2 berücksichtigt dabei prädiktive Streckendaten des Kraftfahrzeugs 3, die ihr von einem Navigationsgerät übermittelt werden, um eine Anhalteposition festzulegen, bei der das Risiko einer Gefährdung oder eines Unfalls minimiert ist.

Sofern der Fahrer in diesem Zustand, in dem das Kraftfahrzeug 3 automatisch von der Sicherheitseinrichtung gefahren wird, Bedieneingaben vornimmt wie eine Bewegung des Lenkrads, eine Pedalbetätigung oder eine Betätigung des Blinkers, werden diese ignoriert, bis die sichere Anhalteposition erreicht ist, woraufhin das Verfahren im Schritt 12 beendet wird.

Fig. 3 zeigt eine Verkehrssituation, bei der das Verfahren für den Betrieb der Sicherheitseinrichtung 2 durchgeführt wird.

Vor dem Kraftfahrzeug 3 befindet sich ein anderes Kraftfahrzeug 15, dessen Geschwindigkeit v2 wesentlich geringer als die Geschwindigkeit v1 des Kraftfahrzeugs 3 ist. Das vorausfahrende Fahrzeug 15 wird von den Sensoren 4 des Kraftfahrzeugs 3 detektiert. Sofern die Auswertung des detektierten Abstands und der detektierten Geschwindigkeit des vorausfahrenden Fahrzeugs 15 bzw. die detektierte Relativgeschwindigkeit ergibt, dass eine Kollision unmittelbar bevorsteht, wird von der Steuerungseinrichtung 5 der Airbag 6 ausgelöst. Falls dann innerhalb des festgelegten Zeitraums hingegen keine Kollision mittels der Beschleunigungssensoren detektiert werden kann, wird von der Sicherheitseinrichtung 2 erkannt, dass eine Falschauslösung des Airbags 6 vorliegt. In dieser Situation wird das Kraftfahrzeug 3 in einen sicheren Zustand überführt. In Fig. 3 ist dazu gestrichelt die Trajektorie 16 dargestellt, entlang der das Kraftfahrzeug 3 von der Sicherheitseinrichtung 2 gesteuert wird. Das Kraftfahrzeug 3 wird von der linken Fahrspur über die rechte Fahrspur auf den Standstreifen 16 gelenkt, wo es bis zum Stillstand abgebremst wird und die sichere Anhalteposition erreicht.

## Patentansprüche

1. Sicherheitseinrichtung (2) für ein Kraftfahrzeug (3), mit wenigstens einem Sensor (4), der dazu ausgebildet ist, einen drohenden Aufprall oder eine drohende Kollision zu detektieren und gegebenenfalls ein Auslösesignal zu erzeugen, sowie mit einer Steuerungseinrichtung (5), die dazu ausgebildet ist, beim Vorliegen eines Auslösesignals eine Schutzeinrichtung auszulösen, und zu prüfen, ob der prognostizierte Aufprall oder die Kollision innerhalb eines prognostizierten Zeitraums stattgefunden hat **dadurch gekennzeichnet, dass** bei einer detektierten Falschauslösung die Sicherheitseinrichtung (2) die Kontrolle über das Kraftfahrzeug (3) übernimmt und dieses in einen automatischen Fahrmodus überführt, wodurch das Kraftfahrzeug (3) in einen sicheren Zustand gebracht wird.

2. Sicherheitseinrichtung nach Anspruch 1,
**dadurch gekennzeichnet,**
**dass** sie dazu ausgebildet ist, eine Falschauslösung der Schutzeinrichtung, insbesondere wenigstens eines Airbags (6) und/oder wenigstens eines Gurtstraffers, anhand von Sensordaten zu detektieren, die vorzugsweise von wenigstens einem Beschleunigungssensor und/oder von wenigstens einem Deformationssensor stammen.

3. Sicherheitseinrichtung nach Anspruch 1 oder 2,
**dadurch gekennzeichnet,**
**dass** das Überführen des Kraftfahrzeugs (3) in den sicheren Zustand das Durchführen eines abgesicherten Nothaltmanövers umfasst.

4. Sicherheitseinrichtung nach Anspruch 3,
**dadurch gekennzeichnet,**
**dass** das Nothaltmanöver das Festlegen einer risikominimalen Anhalteposition aus prädiktiven Streckendaten des Kraftfahrzeugs (3) und das Anfahren der Anhalteposition umfasst.

5. Sicherheitseinrichtung nach einem der vorangehenden Ansprüche,
**dadurch gekennzeichnet,**
**dass** sie dazu ausgebildet ist, das Überführen in den sicheren Zustand unabhängig von einer Lenk- oder Pedalbetätigung des Fahrers vorzunehmen.

6. Verfahren für den Betrieb einer Sicherheitseinrichtung für ein Kraftfahrzeug, mit den folgenden Schritten:
- Detektieren eines drohenden Aufpralls oder einer drohenden Kollision mittels wenigstens eines ein Auslösesignal erzeugenden Sensors;
- Auslösen einer Schutzeinrichtung bei Vorliegen eines Auslösesignals durch eine Steuerungseinrichtung;
- Prüfen ob der prognostizierte Aufprall oder die Kollision innerhalb eines prognostizierten Zeitraums stattgefunden hat **dadurch gekennzeichnet, dass** bei einer detektierten Falschauslösung die Sicherheitseinrichtung (2) die Kontrolle über das Kraftfahrzeug (3) übernimmt und dieses in einen automatischen Fahrmodus überführt, wodurch das Kraftfahrzeug (3) in einen sicheren Zustand gebracht wird.

7. Verfahren nach Anspruch 6,
**dadurch gekennzeichnet,**
**dass** die Sicherheitseinrichtung eine Falschauslösung der Schutzeinrichtung, insbesondere wenigstens eines Airbags oder wenigstens eines Gurtstraffers, anhand von Sensordaten detektiert, die vorzugsweise von wenigstens einem Beschleunigungssensor und/oder von wenigstens einem Deformationssensor stammen.

8. Verfahren nach Anspruch 6 oder 7,
**dadurch gekennzeichnet,**
**dass** die Sicherheitseinrichtung im Rahmen der Überführung des Kraftfahrzeugs in den sicheren Zustand ein abgesichertes Nothaltmanöver durchführt.

9. Verfahren nach Anspruch 8,
**dadurch gekennzeichnet,**
**dass** im Rahmen des Nothaltmanövers eine risikominimale Anhalteposition aus prädiktiven Streckendaten des Kraftfahrzeugs festgelegt wird und die Anhalteposition angefahren wird.

10. Verfahren nach einem der Ansprüche 6 bis 9,
**dadurch gekennzeichnet,**
**dass** die Sicherheitseinrichtung das Kraftfahrzeug unabhängig von einer Lenk- oder Pedalbetätigung des Fahrers in den sicheren Zustand überführt.

## Claims

1. Safety device (2) for a motor vehicle (3), with at least one sensor (4), which is configured to detect an impending impact or an impending collision and optionally to generate a trigger signal, and also with a control device (5), which is configured, in the event of a trigger signal being present, to trigger a protection device and to check whether the predicted impact or the collision has taken place within a predicted period of time, **characterised in that**, in the event of a false triggering being detected, the safety device (2) takes over control of the motor vehicle (3) and puts it into an automatic drive mode, as a result of which the motor vehicle (3) is brought into a safe state.

2. Safety device according to claim 1, **characterised in that** it is configured to detect a false triggering of the protection device, more particularly of at least one airbag (6) and/or of at least one seat-belt pretensioner, using sensor data coming preferably from at least one acceleration sensor and/or from at least one deformation sensor.

3. Safety device according to claim 1 or 2, **characterised in that** the putting of the motor vehicle (3) into the safe state includes the carrying-out of a protected emergency stop manoeuvre.

4. Safety device according to claim 3, **characterised in that** the emergency stop manoeuvre includes the defining of a minimum-risk stopping position from predictive road data of the motor vehicle (3) and the move to the stopping position.

5. Safety device according to one of the preceding claims, **characterised in that** it is configured to perform the putting into the safe state irrespective of any steering or pedal movement by the driver.

6. Method for the operation of a safety device for a motor vehicle, with the following steps:
- detection of an impending impact or of an impending collision by means of at least one sensor generating a trigger signal;
- triggering of a protection device, in the event of a trigger signal being present, by means of a control device;
- checking of whether the predicted impact or the collision took place within a predicted period of time, **characterised in that**, in the event of a false triggering being detected, the safety device (2) takes over control of the motor vehicle (3) and puts it into an automatic drive mode, as a result of which the motor vehicle (3) is brought into a safe state.

7. Method according to claim 6, **characterised in that** the safety device detects a false triggering of the protection device, more particularly of at least one airbag or of at least one seat-belt pretensioner, using sensor data coming preferably from at least one acceleration sensor and/or from at least one deformation sensor.

8. Method according to claim 6 or 7, **characterised in that** the safety device carries out a protected emergency stop manoeuvre as part of putting the motor vehicle into the safe state.

9. Method according to claim 8, **characterised in that**, as part of the emergency stop manoeuvre, a minimum-risk stopping position is defined from predictive road data of the motor vehicle and the vehicle is moved to the stopping position.

10. Method according to one of claims 6 to 9, **characterised in that** the safety device puts the motor vehicle into the safe state irrespective of any steering or pedal movement by the driver.

## Revendications

1. Dispositif de sécurité (2) pour un véhicule automobile (3), comprenant au moins un capteur (4), qui est conçu de manière à détecter un choc imminent ou une collision imminente et à produire éventuellement un signal de déclenchement, ainsi qu'un dispositif de commande (5) qui est conçu de manière à déclencher un dispositif de protection lors de l'émission d'un signal de déclenchement, et
vérifier si le choc pronostiqué ou la collision s'est produit(e) dans un intervalle de temps pronostiqué, **caractérisé en ce que**, lors d'un déclenchement erroné détecté, le dispositif de sécurité (2) prend le contrôle sur le véhicule automobile (3) et celui-ci passe au mode de conduite automatique, qui fait que le véhicule automobile (3) est amené dans un état sécurisé.

2. Dispositif de sécurité selon la revendication 1,
**caractérisé en ce que** :
il est conçu pour détecter un déclenchement erroné du dispositif de protection, en particulier au moins d'un airbag (6) et/ou au moins d'un tendeur de ceinture de sécurité, sur la base de données de capteur qui proviennent de préférence d'au moins un capteur d'accélération et/ou d'au moins un capteur de déformation.

3. Dispositif de sécurité selon la revendication 1 ou 2,
**caractérisé en ce que** :
le passage du véhicule automobile (3) à l'état sécurisé comprend la réalisation d'une manoeuvre d'arrêt d'urgence sécurisée.

4. Dispositif de sécurité selon la revendication 3,
**caractérisé en ce que** :
la manoeuvre d'arrêt d'urgence comprend la détermination d'une position d'arrêt à risque minimal à partir de données de parcours prédictives du véhicule automobile (3) et l'enclenchement de la position d'arrêt.

5. Dispositif de sécurité selon l'une quelconque des revendications précédentes,
**caractérisé en ce que** :
il est conçu pour passer à l'état sécurisé indépendamment de la commande de braquage ou de pédale du conducteur.

6. Procédé de fonctionnement d'un dispositif de sécurité pour un véhicule automobile, comprenant les étapes consistant à :
- détecter un choc imminent ou une collision imminente au moyen au moins d'un capteur produisant un signal de déclenchement;
- déclencher un dispositif de protection lors de l'émission d'un signal de déclenchement par un dispositif de commande ;
- vérifier si le choc pronostiqué ou la collision a eu lieu dans un intervalle de temps pronostiqué, **caractérisé en ce que** :
lors d'un déclenchement erroné détecté, le dispositif de sécurité (2) prend le contrôle sur le véhicule automobile (3) et celui-ci passe en mode de conduite automatique, qui fait que le véhicule automobile (3) est amené dans un état sécurisé.

7. Procédé selon la revendication 6,
**caractérisé en ce que** :
le dispositif de sécurité détecte un déclenchement erroné du dispositif de protection, en particulier au moins d'un airbag (6) et/ou au moins d'un tendeur de ceinture de sécurité, sur la base de données de capteur qui proviennent de préférence d'au moins un capteur d'accélération et/ou d'au moins un capteur de déformation.

8. Procédé selon la revendication 6 ou 7,
**caractérisé en ce que** :
le dispositif de sécurité effectue une manoeuvre d'arrêt d'urgence sécurisée dans le cadre du passage du véhicule automobile à l'état sécurisé.

9. Procédé selon la revendication 8,
**caractérisé en ce que** :
dans le cadre de la manoeuvre d'arrêt d'urgence, une position d'arrêt à risque minimal est déterminée à partir de données de parcours prédictives du véhicule automobile et la position d'arrêt est enclenchée.

10. Procédé selon l'une quelconque des revendications 6 à 9,
**caractérisé en ce que** :
le dispositif de sécurité fait passer le véhicule automobile à l'état sécurisé indépendamment d'une commande de braquage ou de pédale du conducteur.
